# EUROPÄISCHE PATENTSCHRIFT

(11) **EP 3 418 677 B1**
(45) Veröffentlichungstag und Bekanntmachung des Hinweises auf die Patenterteilung: **14.04.2021**
(21) Anmeldenummer: 18179290.4
(22) Anmeldetag: 22.06.2018
(51) Int. Cl.: G01B 9/02

(54) **VORRICHTUNG UND VERFAHREN ZUR INTERFEROMETRISCHEN VERMESSUNG**
DEVICE AND METHOD FOR INTERFEROMETRIC MEASURING
DISPOSITIF ET PROCÉDÉ DE MESURE INTERFÉROMÉTRIQUE

(30) Priorität: 23.06.2017 DE 102017113997
(43) Veröffentlichungstag der Anmeldung: 26.12.2018
(73) Patentinhaber: SmarAct Holding GmbH, 26135 Oldenburg (DE)
(72) Erfinder: Rode, Sebastian, 49624 Löningen (DE); Baune, Christoph, 49610 Quakenbrück (DE)
(74) Vertreter: Eisenführ Speiser

(56) Entgegenhaltungen:
- EP-A2- 1 225 420
- DE-A1-102011 006 055
- FANG CHENG ET AL: "High-resolution Angle Measurement based on Michelson Interferometry", PHYSICS PROCEDIA, Bd. 19, 31. Dezember 2011 (2011-12-31), Seiten 3-8, XP028262339, ISSN: 1875-3892, DOI: 10.1016/J.PHPRO.2011.06.118 [gefunden am 2011-08-11]

## Beschreibung

Die vorliegende Erfindung betrifft eine Vorrichtung und ein Verfahren zur interferometrischen Vermessung und insbesondere eine Vorrichtung zur Vermessung einer Rotation eines Körpers um eine Rotationsachse, ein Positioniersystem mit einer solchen Vorrichtung und ein Verfahren zur Vermessung einer Rotation eines Körpers um eine Rotationsachse, mit einem Interferometer und einer Optik.

DE 10 2011 006 055 A1 offenbart eine Positionsmessvorrichtung sowie ein Positioniersystem für eine Maskeninspektionseinrichtung. Eine Positionsmessvorrichtung für eine Maskeninspektionseinrichtung zur Inspektion einer Lithographie-Maske gemäß DE 10 2011 006 055 A1 ist dazu konfiguriert, die durch Ort und/oder Kippstellung bestimmte Position eines Objekts zu vermessen und mindestens einen sich aufweitenden Meßstrahl mit einem Aufweitungswinkel von mindestens 1° auszusenden.

EP 1 225 420 A2 offenbart eine laserbasierte Interferenzmessvorrichtung, die einen Lichtstrahl von einer Laserlichtquelle in wenigstens zwei Lichtstrahlen aufteilt, die Lichtstrahlen durch voneinander unterschiedliche Lichtpfade führt, die Lichtstrahlen rekombiniert, die Lichtstrahlen miteinander interferieren lässt, um Interferenzlicht zu erzeugen, das Interferenzlicht opto-elektrisch in eine optische Frequenz überträgt und ein Wegmaß eines Objekts, das eine optische Pfadlänge eines Abschnitts eines optischen Pfads ändert, auf Basis der optischen Frequenz misst. Die Messvorrichtung besitzt einen Abschnitt zum Erzeugen der wenigstens zwei Mess-Lichtstrahlen aus der Laserlichtquelle, zwei Reflektionsebenen, die in einem Objekt enthalten sind, dass sich um eine Messachse bewegt, und die Rücken-an-Rücken zueinander an der Messachse angeordnet sind, und ein gegenüberliegendes optisches Einfallssystem zum jeweiligen Richten der Mess-Lichtstrahlen auf die Reflektionsebenen, so dass die Messlichtstrahlen einander über die Messachse gegenüberliegen.

Im Paper "High-resolution Angle Measurement based on Michelson Interferometry" von Fang Cheng und Kuang-Chao Fan (Physics Procedia 19 (2011) 3-8) wird ein umkonfiguriertes Michelson-Interferometer zur hochauflösenden Winkelmessung vorgeschlagen. Der Winkelversatz des Objektspiegels verursacht eine optische Pfaddifferenz, die eine Interferenz erzeugt. Mit einem optischen Phasenversatzmodul nehmen die Photodetektoren Quadratur-Signale mit 90°-Phasenversatz auf. Mit Puls-Zählen und Phaseunterteilungsverarbeitung kann die optische Pfadänderung berechnet und in einen Winkelversatz umgesetzt werden.

In einer Vielzahl von Anwendungen besteht ein Wunsch dahingehend, bei rotatorischen Bewegungen auftretende Störbewegungen, die etwa durch eine Exzentrizität und/oder eine Verkippung einer Symmetrieachse eines Körpers gegenüber der Rotationsachse entstehen, zu messen und idealerweise durch geeignete Maßnahmen auszugleichen.

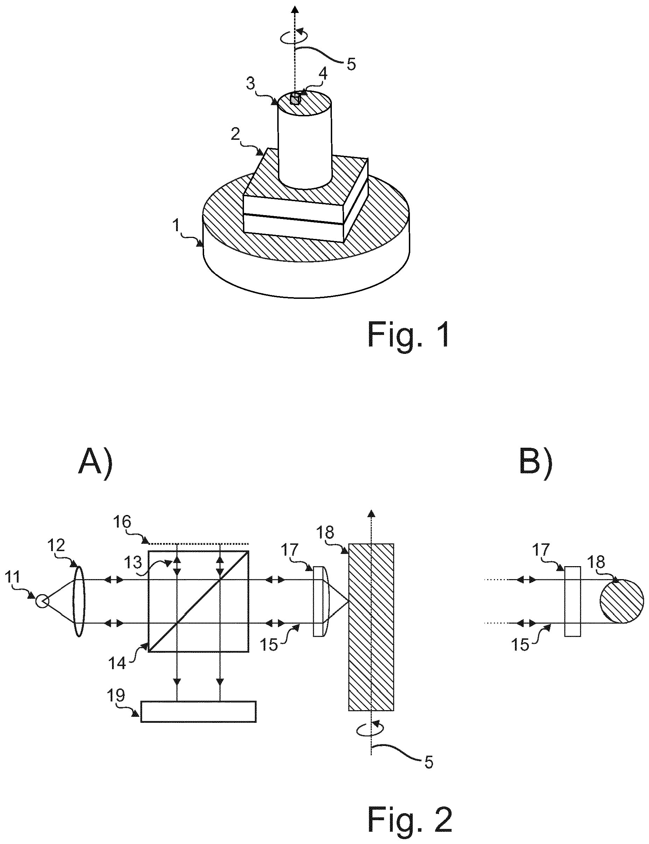

Für kristallographische Untersuchungen z.B. in einem Synchrotron ist es bisweilen erforderlich, die oft sehr kleinen Kristallproben exakt, im Idealfall mit submikrometer Genauigkeit, in einem Messstrahl zu drehen. Die Rotationsachse sollte hierbei möglichst exakt durch die Probe verlaufen. Dazu werden unterschiedliche bekannte Bewegungssysteme genutzt, z.B. das in Fig. 1 dargestellte Beispielsystem.

Das in Fig. 1 illustrierte Bewegungssystem umfasst eine Rotationseinheit 1, die die Drehbewegung durchführt. Darüber bzw. darauf befindet sich eine Ausgleichseinheit 2, welche in der hier dargestellten einfachen Ausführung von einem XY-Tisch 2 gebildet wird. Die Ausgleichseinheit 2 ist fest mit der rotatorischen Einheit 1 verbunden und wird mitbewegt. Auf der Ausgleichseinheit 2 ist eine Probenaufnahme 3 montiert. In diesem Fall besteht die Aufnahme 3 aus einem zylindrischen Bauteil 3 mit definiertem Durchmesser. Auf der Probenaufnahme 3 befindet sich wiederum die zu untersuchende Probe 4. Die Rotationseinheit 1 erlaubt es, die Probe 4 zu drehen und über die Ausgleichseinheit kann dabei die Drehachse 5 der Rotationseinheit 1 so eingestellt werden, dass sie genau durch die Probe 4 verläuft (bzw. die Probe 4 so positioniert werden, dass durch sie die Drehachse verläuft).

Es sei bemerkt, dass die eingestellte Drehachse dabei nicht zwangsläufig die Drehachse der Rotationseinheit 1 ist, sondern (mit einem entsprechenden Aufbau) frei im Raum definiert werden kann. Dies ist insofern von Bedeutung, als dass es die Halterung der Probe es oft nicht oder nur mit erheblichem Aufwand erlaubt, die Probe direkt auf der natürlichen Drehachse des Bewegungssystems zu positionieren. Im Allgemeinen wird die Probe exzentrisch angebracht.

Da in jedem Fall der mechanische Aufbau praktisch nie perfekt ist, treten bei allen Bewegungen Störungen auf, d.h. Abweichungen zwischen der eigentlich gewollten und der tatsächlich Bewegung. Diese Störbewegungen müssen beispielsweise für moderne kristallographische Verfahren kleiner als 1 µm sein und sollten im Idealfall sogar im unteren nm-Bereich liegen.

Um die somit auftretenden Störungen adressieren zu können, müssen sie bekannt sein.

Es gibt im Stand der Technik verschiedene Verfahren oder Ansätze, die auftretenden Störbewegungen zu vermessen und auszugleichen. Sie lassen sich prinzipiell in zwei Rubriken einteilen, nämlich in passive und in aktive Verfahren.

Bei passiven Verfahren, werden die Störbewegungen bei der rotatorischen Bewegung mit einer Kalibrierroutine gemessen und in der Steuerung z.B. mittels Look-Up Tabelle hinterlegt. Während der eigentlichen Applikation wird dann die Bewegung durch die Ausgleichseinheit korrigiert.

Maßgeblich für diese Art Verfahren ist demnach, dass sie eine Kalibrierroutine erfordern, mit einem eigens dafür vorgesehenen Messsystem. In den meisten Fällen muss dieses Messsystem für die Kalibrierung montiert werden, was es sehr aufwendig macht, wenn die eigentliche Applikation beispielsweise in Vakuum durchgeführt wird. Oft ist es aufgrund von fehlendem Bauraum nicht möglich, das Bewegungssystem am späteren Einsatzort zu kalibrieren. Der Aus- und Wiedereinbau bewirkt jedoch, dass die Kalibrierung nicht repräsentativ ist.

Aktive Verfahren nutzen eine Messvorrichtung, um die Störbewegung der Probenaufnahme während der eigentlichen Applikation zu messen. Diese Messdaten werden verwendet, um das Ausgleichsystem zu steuern. Dieser Ansatz hat gegenüber passiven Verfahren den Vorteil, dass er nicht nur systematische Fehler ausgleichen kann, sondern auch spontane oder zufällige Fehler wie Erschütterungen im Labor, Temperaturschwankungen, etc.

Zudem ist die eigentliche Implementierung oft einfacher und damit performanter, weil keine aufwendige Kalibrierroutine und Look-Up Tabelle implementiert werden muss.

Für beide Verfahrensarten ist es jedoch erforderlich, die Störbewegung im nm-Bereich zu detektieren.

In der Literatur werden verschiedene (optische, elektronische, mechanische,...) Verfahren zur Vermessung von Störbewegungen beschrieben, wobei insbesondere hinsichtlich interferometrischer Verfahren eine Übersicht in Artikel "Interferometric characterization of rotation stages for X-ray nanotomography" von T. Stankevic et al. (Review of Scientific Instruments 88, 053703 (2017); doi: http://dx.doi.org/10.1063/1.4983405) zu finden ist.

In dieser Veröffentlichung wird ein Aufbau und ein aktives Verfahren beschrieben, mit dem die Störbewegungen bei einer rotatorischen Bewegung auf wenige nm reduziert werden können (Standardabweichung 13,5 nm). Weitere Verfahren und Aufbauten sind beispielsweise in den Referenzen des Papers zu finden.

Der in der obigen Veröffentlichung beschriebene Aufbau verwendet einen zylindrischen Messzylinder, dessen Bewegung durch fokussierende, interferometrische Messköpfe vermessen wird. Aufgrund der Störbewegungen bewegt sich der Zylinder relativ zu den Messköpfen. Aus den Messdaten kann durch geeignete Berechnung auf die Störbewegungen während der Rotation zurückgeschlossen werden.

Es wurde allerdings im Rahmen der vorliegenden Erfindung erkannt, dass ein Messaufbau, wie er in der genannten Veröffentlichung beschrieben ist, einen sehr relevanten Nachteil aufweist.

Die hierbei verwendeten Interferometerköpfe fokussieren den gaußförmigen Messstrahl auf einen kleinen Punkt. Dies wird vorgesehen und ist erforderlich, um eine relativ große Winkelakzeptanz zu haben. Ansonsten würde eine "Wobble"-Bewegung des Messzylinders zu einem Signalverlust führen. Allerdings bewirkt die punktförmige Fokussierung auch, dass die maximal messbare Exzentrizität limitiert ist. Ohne einen genauen Zusammenhang herzuleiten, kann dennoch angegeben werden, dass dieser eine Funktion aus Zylinderdurchmesser und Punktgröße des fokussierenden Messstrahls ist und zwar derart, dass je kleiner der Messpunkt ist, umso kleiner auch die maximal messbare Exzentrizität ist.

Dies ist ein Dilemma, denn um große Wobble-Bewegungen zu messen, muss nach dem bekannten Ansatz der Messstrahl sehr stark fokussiert werden (mit dem Ziel einer hohen Winkelakzeptanz), wobei dies gleichzeitig jedoch die maximal messbare Exzentrizität einschränkt. Es muss für jedes Experiment ein Kompromiss gefunden werden, was einerseits Aufwand bedeutet und andererseits die Leistungsfähigkeit des Ansatzes beschränkt.

Aufgrund der mit dem bekannten Ansatz sehr limitiert messbaren Exzentrizität muss die Symmetrieachse des Messzylinders sehr genau mit der natürlichen Drehachse der rotatorischen Einheit übereinstimmen. Ist dies nicht der Fall, kann das bekannte interferometrische Messsystem bei kontinuierlichen Bewegungen der rotatorischen Einheit den Störbewegungen des Messzylinders nicht ohne weiteres folgen. Dies erscheint etwa in diesem Fall nur möglich, wenn eine aufwendige Kalibrierroutine durchgeführt wird, bei der der Messzylinder schrittweise gedreht und die Ausgleichseinheit benutzt wird, um die momentane Exzentrizität auszugleichen. Nur so können die Störbewegungen bei großer Exzentrizität vermessen werden. Damit diese aufwendige Kalibrierung vermieden werden kann, muss der Zylinder sehr präzise auf den Aufbau montiert werden. Dies ist aufwendig und somit teuer.

Ferner muss auch die Drehachse der Probe mit der Symmetrieachse des Messzylinders und der natürlichen Drehachse der rotatorischen Einheit übereinstimmen. Es müssen demnach drei Drehachsen zueinander ausgerichtet werden.

Zudem kann es das Experiment erfordern, dass die virtuelle Drehachse, die Achse um der beim eigentlichen Experiment gedreht wird, frei eingestellt und im laufenden Experiment geändert werden soll. Aufgrund der limitierten Messbereiche des genannten Aufbaus, ist dies nur für sehr kleine Verschiebungen möglich. Besonders große Proben erfordern jedoch oft wesentlich größere Verschiebungen, bis in den Millimeterbereich.

Eine Zielsetzung der vorliegenden Erfindung ist es, die hier erkannten Nachteile der bekannten Lösung, insbesondere hinsichtlich Ausrichtaufwand und beschränkter Flexibilität, vermieden oder zumindest verringert werden.

Erfindungsgemäß wird nach einem ersten Aspekt eine Vorrichtung zur Vermessung einer Rotation eines Körpers um eine Rotationsachse vorgeschlagen, wie sie in Anspruch 1 definiert ist.

Erfindungsgemäß wird nach einem zweiten Aspekt ein Verfahren zur Vermessung einer Rotation eines Körpers um eine Rotationsachse, mit einem Interferometer und einer Optik vorgeschlagen, wie es in Anspruch 7 definiert ist.

Ein Teil des Hintergrunds der vorliegenden Erfindung findet sich in den folgenden Überlegungen.

Es wurde erkannt, dass die oben genannten experimentellen Nachteile wesentlich reduziert werden können, wenn man den Messstrahl nicht punktförmig sondern in Form einer Linie auf den Messzylinder fokussiert. Dabei wird für die Fokussierung anstelle einer sphärischen Linse beispielsweise eine Zylinderlinse verwendet. Der linienförmig fokussierte Messstrahl wird dabei so auf den Messzylinder gerichtet, dass die fokussierte Linie senkrecht zur Symmetrieachse des Messzylinders steht. Somit hat man den Effekt, dass aufgrund der Fokussierung der interferometrische Messkopf sehr winkeltolerant ist, d.h. er erlaubt es, Wobble-Bewegungen des Zylinders zu verfolgen, und aufgrund des breiten Strahlprofils senkrecht zur Drehachse können große exzentrische Bewegungen gemessen werden. Die maximal detektierbare Exzentrizität ist dabei eine Funktion aus Zylinderdurchmesser und Linienbreite und zwar derart, dass je breiter die Linie ist, umso größer ist auch die maximal messbare Exzentrizität.

Ein Vorteil ist es nun, dass es zwei unabhängige Größen gibt, die die Messbereiche definieren. Über die Brennweite der Zylinderlinse kann bestimmt werden, wie stark der Messstrahl fokussiert wird. Je besser die Fokussierung, umso winkeltoleranter ist der Messkopf, und folglich können umso größere Wobble-Bewegungen vermessen werden. Unabhängig davon bestimmt die Linienbreite die maximal messbare Exzentrizität.

Im Gegensatz zu bekannten Aufbauten ermöglicht die spezielle Art der Fokussierung den interferometrischen Messkopf optimal auf das durchzuführende Experiment abzustimmen. Somit wird der Ausrichtaufwand erheblich reduziert und die Flexibilität erhöht. Dies ist besonders von Vorteil für Experimente, die unter schwierigen Bedingungen wie in Vakuum oder kryogenen Umgebungen durchgeführt werden.

Es sei darauf hingewiesen, dass im Prinzip jeder Interferometermessstrahl von beliebigen Interferometern linienförmig fokussiert und somit optimal auf das jeweilige Experiment abgestimmt werden kann.

Die Vermessung der Rotation des Körpers kann einerseits, wie schon oben beschrieben, mit dem Ziel erfolgen, die Positionierung des Körpers hinsichtlich der Rotationsachse zu bestimmen bzw. einzustellen. Hierbei wird davon ausgegangen, dass die Form des Körpers, zumindest soweit sie für die Messungen relevant ist, bekannt ist, wobei eine rotationssymmetrische Form hierbei von Vorteil ist.

Auf der anderen Seite kann allerdings die Erfindung, sofern nicht auf die Positionierung als solches abgestellt wird, auch dazu genutzt werden, die Form des Körpers zu bestimmen. Bei einer konstant angenommenen Rotationsachse kann jede "Störung" der Kontur des Körpers zugerechnet werden.

In einer vorteilhaften Ausgestaltung eines Aspekts der Erfindung weist das Interferometer eine Haupteinheit und einen Messkopf auf, die optisch über wenigstens einen Lichtleiter miteinander verbunden sind, wobei die Haupteinheit eine Lichtquelle und einen Sensor aufweist. Hierbei ist die Optik im Messkopf vorgesehen oder daran angebracht.

Insbesondere für Anwendungen im Vakuumbereich und/oder unter kryogenen Bedingungen ist es von Vorteil, wenn ein Interferometermesskopf von einer Interferometerauswerteeinheit faseroptisch getrennt ist. Die Auswerteeinheit enthält dabei alle aktiven Komponenten wie Laser, Elektronik, Prozessor und der Kopf ist idealerweise passiv, d.h. enthält nur optische Bauteile wie Linsen, Strahlteiler etc. Somit gibt es keine aktiven Wärmequellen im Messkopf, er kann sehr kompakt gebaut werden und enthält im Wesentlichen nur Glasbauelemente. Dies hat erhebliche Vorteile bei Anwendungen im Vakuum und in kroygenen Umgebungen, vor allem hinsichtlich der Vermeidung von aktiven Wärmequellen, hinsichtlich einer kompakten Bauform und der Materialauswahl.

Die Wärmeabfuhr ist im Vakuum aufgrund der guten thermisch isolierenden Wirkung sehr schlecht, d.h. bei Wärmezufuhr heizt sich ein System auf und es dauert bisweilen sehr lange, bis das System im thermischen Gleichgewicht ist. Solange das System nicht im thermischen Gleichgewicht ist, gibt es aufgrund der Materialausdehnung Bewegungen, die das Messergebnis verfälschen.

Wenn eine Anwendung bei extrem tiefen Temperaturen (wenige Kelvin) durchgeführt werden soll, ist es von großer Bedeutung, so wenig Wärme wie möglich ins System einzubringen.

Besonders im Vakuum und in kryogenen Umgebungen ist der verfügbare Bauraum in den meisten Fällen sehr eingeschränkt. Es ist hilfreich für die Messung von Störbewegungen, wenn sich der Messkopf dicht am Messzylinder und an der Probe befindet. Dies lässt sich besser erreichen, wenn der Messkopf sehr kompakt ist.

Auch beim Messen unter speziellen Bedingungen ist es erforderlich, dass alle Bauelemente, die diesen Bedingungen ausgesetzt werden, unter diesen Bedingungen weiterhin funktionieren. Die Materialauswahl ist dabei bisweilen sehr eingeschränkt. Somit ist es von Vorteil, wenn der Messkopf im Wesentlichen nur aus optischen Einheiten (z.B. Glasbauelementen) besteht.

In einer anderen vorteilhaften Ausgestaltung eines Aspekts der Erfindung ist das Interferometer zur Nutzung des Messstrahls und eines Referenzstrahls ausgestaltet, wobei die Optik eine erste Optikeinheit und eine zweite Optikeinheit aufweist, wobei die erste Optikeinheit dazu ausgestaltet ist, den Messstrahl zu der ersten Fokuslinie zu fokussieren, wobei die zweite Optikeinheit dazu ausgestaltet ist, den Referenzstrahl zu einer zweiten Fokuslinie zu fokussieren, die parallel zur ersten Fokuslinie verläuft, und wenigstens einen Teil einer Reflektion der zweiten Fokuslinie vom Körper dem Interferometer zuzuführen, wobei die Optik dazu ausgestaltet ist, den Messstrahl und den Referenzstrahl aus einander entgegengesetzten Richtungen auf den Körper zu richten.

Eine Implementierung mit einem Ansatz entsprechend einem Michelson-Interferometer kann vorsehen, dass der Messstrahl des verwendeten Interferometers linienförmig fokussiert wird, wobei der Referenzstrahl des Interferometers auf einen ortsfesten Spiegel trifft. Dieser Spiegel dient als Referenz und die Störbewegungen werden relativ zu diesem Spiegel gemessen.

Die Auflösung der Messapparatur lässt sich jedoch im Vergleich hierzu um den Faktor zwei erhöhen, wenn der Mess- und der Referenzstrahl auf den Messkörper (etwa ein Meßzylinder) gerichtet werden. Dabei ist der Messstrahl beispielsweise auf die Vorderseite des Zylinders gerichtet und der Referenzstrahl wird um den Zylinder geführt und trifft ebenfalls linienförmig fokussiert auf die Rückseite des Zylinders. Wenn sich nun der Zylinder beispielsweise auf den Messstrahl zu bewegt, bewegt er sich um den gleichen Betrag vom Referenzstrahl weg. Der Gangunterschied der beiden Teilstrahlen ist somit doppelt so groß wie der entsprechende Gangunterschied bei einer Messung mit stationärem Referenzspiegel. Somit ist die Auflösung ebenfalls doppelt so hoch.

Es kann vorgesehen sein, den Strahl bzw. die Strahlen in geeigneter Weise weiter zu falten, um damit die Auflösung weiter zu erhöhen.

Neben der Erhöhung der Auflösung hat das differentielle Messen noch einen weiteren Vorteil, nämlich dass Bewegungen quer zur Messrichtung die Messung nicht beeinflussen bzw. nicht detektiert werden. Aufgrund der Oberflächenkrümmung würde eine Bewegung des Messzylinders quer zur Messrichtung eines Messkopfes mit ortsfestem Spiegel eine virtuelle Bewegung in Messrichtung bewirken, weil der Messstrahl dem Oberflächenprofil folgt. Bei der differentiellen Messung, ist die Wegänderung gemessen vom Referenz- und vom Messstrahl aufgrund der zylindrischen Oberflächenform allerdings identisch und trägt daher nicht zum Gangunterschied der beiden Strahlen bei. Somit wird keine Bewegungsänderung registriert. Dies hat einen Vorteil dahingehend, dass die Oberflächenform nicht mittels Look-Up Tabelle o.ä. ausgeglichen werden müsste.

In einer anderen vorteilhaften Ausgestaltung eines Aspekts der Erfindung ist das Interferometer zur Nutzung des Messstrahls und eines Referenzstrahls ausgestaltet, wobei die Optik eine erste Optikeinheit und eine dritte Optikeinheit aufweist, wobei die erste Optikeinheit dazu ausgestaltet ist, den Messstrahl zu der ersten Fokuslinie zu fokussieren, wobei die dritte Optikeinheit dazu ausgestaltet ist, den Referenzstrahl zu einer dritten Fokuslinie zu fokussieren, die parallel zur ersten Fokuslinie verläuft, und wenigstens einen Teil einer Reflektion der dritten Fokuslinie vom Körper dem Interferometer zuzuführen, wobei die erste und die dritte Fokuslinie entlang der Rotationsachse gegeneinander versetzt sind.

Durch den Versatz der Fokuslinien entlang der Rotationsachse kann eine Verkippung des Körpers gegenüber dieser Rotationsachse erfasst werden, wobei hierbei allerdings keine exzentrischen Bewegungen des Körpers erfasst werden, sofern nicht zusätzliche Maßnahmen in dieser Richtung vorgesehen sind.

In einer anderen vorteilhaften Ausgestaltung eines Aspekts der Erfindung ist das Interferometer zur Nutzung eines Messstrahls und eines von einem Referenzspiegel reflektierten Referenzstrahls ausgestaltet, wobei das Interferometer einen Strahlteiler zur Aufteilung eines Ausgangsstrahls in den Messstrahl und den Referenzstrahl aufweist, wobei der Strahlteiler dazu ausgestaltet ist, den Ausgangsstrahl so aufzuteilen, dass der Messstrahl eine gegenüber dem Referenzstahl höhere Intensität aufweist, und/oder der Referenzspiegel als teildurchlässiger Spiegel zur Verringerung der Intensität des reflektierten Referenzstrahls gegenüber dem einfallenden Referenzstrahl ausgestaltet ist.

Eine experimentelle Schwierigkeit, die sich bei der linienförmigen Fokussierung und der gekrümmten Oberfläche des Messzylinders ergibt, ist, dass sich das von der Oberfläche reflektierte Licht auf einen großen Raumwinkelbereich verteilt und der Messkopf davon im Allgemeinen nur einen kleinen Teil einfängt. Besonders bei der Messung mit stationärem Referenzspiegel ist es daher sinnvoll, möglichst viel Licht in den Messarm zu bringen. Dies lässt sich beispielsweise durch Einstellung des Strahlteilerverhältnisses bewerkstelligen. Beispielsweise könnte ein Strahlteilerwürfel verwendet werden, um das Laserlicht in Referenz- und Messstrahl aufzuteilen. Hierbei könnte man nun anstelle eines 50/50 Strahlteilers, der das Licht gleichmäßig auf beide Arme verteilen würde, einen 80/20 Strahlteiler verwenden. Dieser würde dann nur 20% des Lichtes in den Referenzarm leiten und 80% in den Messarm. Somit könnten die Signalverluste aufgrund der der Streuung des reflektierten Messstrahls kompensiert werden. Dies ist ein weiterer Parameter, mit dem der Messkopf optimal auf das jeweilige Experiment abgestimmt werden kann. Bei differentiellen Messungen ist eine derartige ungleichmäßige Aufspaltung allerdings nicht nötig bzw. nicht von Nutzen.

In einer vorteilhaften Ausgestaltung der Erfindung ist ein Positioniersystem vorgesehen, das eine Rotationseinheit mit einer Rotationsachse, eine an der Rotationseinheit angebrachten Positioniereinheit, die zur Positionierung eines Körpers wenigstens in einer quer zur Rotationsachse verlaufenden Ebene ausgestaltet ist, und eine erfindungsgemäße Vorrichtung zur Vermessung einer Rotation des Körpers um eine Rotationsachse aufweist, wobei das Positioniersystem dazu ausgestaltet ist, anhand von Vermessungsergebnissen der Vorrichtung unter Nutzung der Positioniereinheit eine gewünschte Positionierung des Körpers relativ zur Rotationsachse zu erreichen.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines bekannten Bewegungssystems,
- Fig. 2: eine schematische Darstellung zur Illustration einer Vorrichtung gemäß einem ersten Ausführungsbeispiel der Erfindung,
- Fig. 3: eine schematische Darstellung zur Illustration einer Vorrichtung gemäß einem zweiten Ausführungsbeispiel der Erfindung,
- Fig. 4: eine schematische Darstellung zur Illustration einer Vorrichtung gemäß einem dritten Ausführungsbeispiel der Erfindung und
- Fig. 5: ein schematisches Ablaufdiagramm eines Ausführungsbeispiels des erfindungsgemäßen Verfahrens.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

Fig. 2 zeigt eine schematische Darstellung zur Illustration einer Vorrichtung gemäß einem ersten Ausführungsbeispiel der Erfindung.

Der in Fig. 2 gezeigte exemplarische Aufbau nutzt als konzeptuelle Basis den Ansatz eines Michelson-Interferometers und umfasst eine Laserlichtquelle 11 und eine kollimierende Optik 12. Der von der Laserlichtquelle 11 ausgesandte und von der Optik 12 kollimierte Strahl trifft auf einen Strahlteilerwürfel 14 und wird dort in zwei Teilstrahlen zerlegt, nämlich einen Referenzstrahl 13 und einen Messstrahl 15. Der Referenzstrahl 13 trifft auf einen Referenzspiegel 16, wird dort reflektiert und auf einen Detektor 19 geleitet. Der Messstrahl 15 verlässt den Strahlteilerwürfel 14 und wird durch eine Zylinderlinse 17 linienförmig auf einen Messzylinder 18 (der um eine Rotationsachse 5 rotiert) fokussiert. Dort wird auch er reflektiert und über den Strahlteiler 14 ebenfalls auf den Detektor 19 geleitet.

Beide Strahlen interferieren im Strahlteilerwürfel 14 und der Detektor 19 misst das Interferogramm, welches es erlaubt, durch geeignete Verfahren auf die Bewegung des Messzylinders 18 (genauer auf die Bewegung der reflektierenden Oberfläche des Messzylinders 18 entlang der Einfalls- bzw. Ausfallsrichtung des Messtrahls 15) bei der Rotation zu schließen.

Die grundsätzliche Arbeitsweise des Interferometers ist dem Fachmann bekannt und muss daher hier nicht weiter erläutert werden. Gleiches gilt für die Auswertung der auf diese Weise gewonnenen Informationen und deren Nutzung.

Es sei zudem bemerkt, dass die Erfindung nicht auf Interferometer des Michelson-Typs beschränkt ist und entsprechend auch andere Arten von Interferometern eingesetzt werden können.

Es ist nicht notwendig, dass die linienförmige Fokussierung durch eine Zylinderlinse erfolgt, da auch andere Abbildungssysteme oder dergleichen genutzt werden können, die ein vergleichbares Ergebnis erzielen.

Der Teil A) der Fig. 2 zeigt den Aufbau im Ganzen, wobei die Rotationsachse 5 in der Zeichnungsebene liegt. Der Teil B) der Fig. 2 zeigt im Ausschnitt lediglich die Zylinderlinse 17, den Messzylinder 18 und den Verlauf des Messtrahls 15 in einer Aufsicht (die Rotationsachse verläuft senkrecht zur Zeichnungsebene) und illustriert in der Zusammenschau mit Teil A) die linienartige Fokussierung des Messstrahls 14.

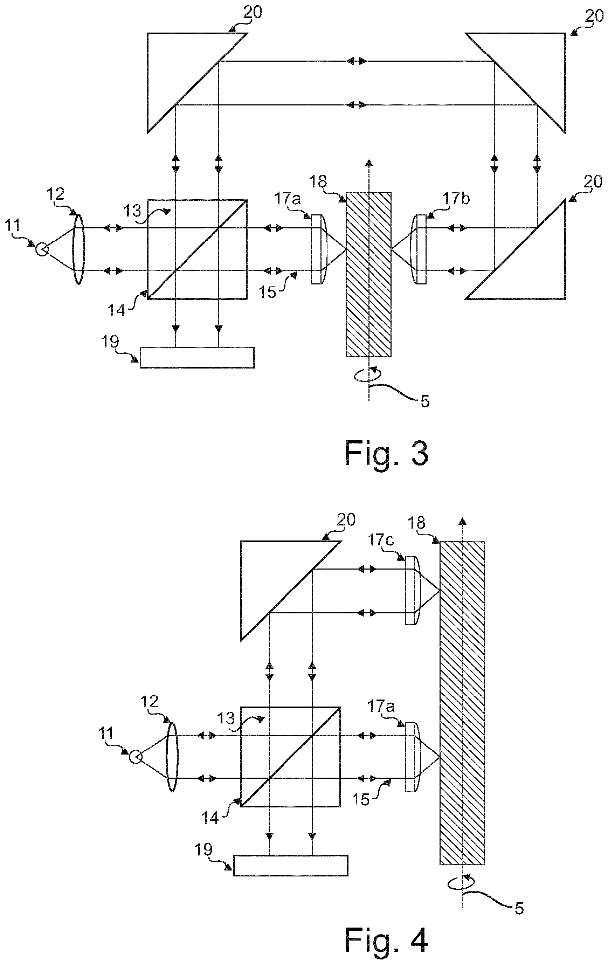

Fig. 3 zeigt eine schematische Darstellung zur Illustration einer Vorrichtung gemäß einem zweiten Ausführungsbeispiel der Erfindung.

Das in Fig. 3 gezeigte Ausführungsbeispiel unterscheidet sich von dem in Fig. 2 gezeigten Ausführungsbeispiel darin, dass anstelle eines (festen) Referenzspiegels ein differenzieller Aufbau vorgesehen ist.

Der Unterschied ist, dass der Referenzstrahl 13 nun nicht mehr auf einen ortsfesten Referenzspiegel geleitet wird, sondern durch ein geeignetes Umlenksystem 20 durch eine zweite Zylinderlinse 17b (die Zylinderlinse 17a entspricht der Zylinderlinse 17 aus Fig. 2) ebenfalls auf den Messzylinder 18 gerichtet wird. Beide Strahlen stehen sich somit gegenüber, was eine Verdoppelung des resultierenden Gangunterschiedes bedeutet, was gleichbedeutend ist mit einer Verdoppelung der Messauflösung.

Zur Verbesserung der Messauflösung tritt als weiterer Vorteil hinzu, dass bei einer derartigen Anordnung eine Bewegung des Zylinders 18 senkrecht zur Bildebene ungeachtet seiner Oberflächenkrümmung nicht mehr zu einer Änderung des Gangunterschiedes führt. Es ergibt sich damit keine virtuelle Verschiebung mehr, was die Auswertung der Messdaten erheblich vereinfacht.

Da hier sowohl der Messstrahl 15 als auch der Referenzstrahl 13 auf den Messzylinder 18 gerichtet sind, ist die Einordnung als "Messtrahl" und "Referenzstrahl" willkürlich, so dass die Bezeichnungen in diesem Ausführungsbeispiel austauschbar sind.

Die Darstellung von Fig. 3 zeigt eine Umlenkung des "Referenzstrahls" derart, dass er "über" den Messzylinder hinweg geleitet wird, wobei Umlenkung an sich nicht hierauf beschränkt ist (z.B. könnte die Umlenkung auch um die Messzylinder herum, etwa in einer Ebene senkrecht zu Zeichnungsebene erfolgen).

Fig. 4 zeigt eine schematische Darstellung zur Illustration einer Vorrichtung gemäß einem dritten Ausführungsbeispiel der Erfindung.

Auch bei dem Ausführungsbeispiel von Fig. 4 ist kein fester Referenzspiegel vorgesehen. Der Aufbau dieses Ausführungsbeispiels sieht hier vor, dass der Referenzstrahl 13 zunächst entlang der Rotationsachse 5 geleitet wird, um dann durch eine Umlenkung 20 und eine Zylinderlinse 17c in Form einer Linie auf den Messzylinder 18 fokussiert zu werden, wobei diese Linie gegenüber der entsprechenden Linie des Messstrahls 15 entlang der Richtung der Rotationsachse 5 parallel versetzt ist.

Dieses Ausführungsbeispiel erlaubt, Kippbewegungen des Messzylinders 18 zu vermessen. Dieser Messaufbau ist allerdings nicht empfindlich für exzentrische Bewegungen des Messzylinders. Kippbewegungen des Zylinders 18 erzeugen Gangunterschiede zwischen den beiden Teilstrahlen und somit ein Messsignal, das direkt proportional zur Kippbewegung ist.

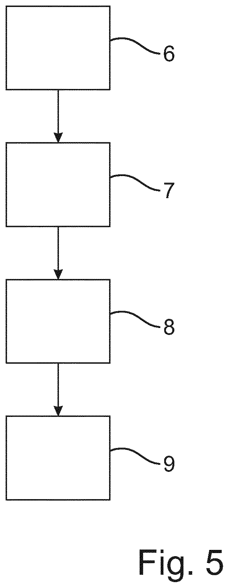

Fig. 5 zeigt ein schematisches Ablaufdiagramm eines Ausführungsbeispiels des erfindungsgemäßen Verfahrens.

Das Verfahren zur Vermessung einer Rotation eines Körpers um eine Rotationsachse nutzt ein Interferometer und eine Optik. Durch die Optik wird wenigstens ein Messstrahl des Interferometers zu einer ersten Fokuslinie fokussiert, die quer zur Rotationsachse verläuft. Wenigstens einen Teil einer Reflektion der ersten Fokuslinie vom Körper wird dann wiederum dem Interferometer zugeführt.

Die Vermessung des Körpers wird also unter Nutzung des Interferometers und der Reflektion vorgenommen.

Die Illustration aus Fig. 5 verweist auf eine Erzeugung eines Messstrahls und eines Referenzstrahls in Schritt 6, wobei in Schritt 7 zumindest der Messstrahl zu einer Fokuslinie fokussiert wird, deren Reflektion in Schritt 8 zur Interferenz genutzt wird. In Schritt 9 erfolgt die Auswertung.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

## Patentansprüche

1. Vorrichtung zur Vermessung einer Rotation eines Körpers (18) um eine Rotationsachse (5), mit
einem Interferometer (11, 12, 14, 16, 19) und
einer Optik (17, 17a),
wobei die Optik (17, 17a) dazu ausgestaltet ist, wenigstens einen kollimierten Messstrahl (15) des Interferometers zu einer ersten Fokuslinie auf den Körper (18) zu fokussieren, die quer zur Rotationsachse (5) verläuft, und wenigstens einen Teil einer Reflektion der ersten Fokuslinie vom Körper (18) dem Interferometer zuzuführen,
wobei die Vorrichtung dazu ausgestaltet ist, die Vermessung unter Nutzung des Interferometers und der Reflektion vorzunehmen.

2. Vorrichtung nach Anspruch 1,
wobei das Interferometer eine Haupteinheit (11, 19) und einen Messkopf (12, 14) aufweist, die optisch über wenigstens einen Lichtleiter miteinander verbunden sind, wobei die Haupteinheit eine Lichtquelle (11) und einen Sensor (19) aufweist.

3. Vorrichtung nach einem der vorstehenden Ansprüche,
wobei das Interferometer zur Nutzung des Messstrahls (15) und eines Referenzstrahls (13) ausgestaltet ist,
wobei die Optik eine erste Optikeinheit (17a) und eine zweite Optikeinheit (17b) aufweist,
wobei die erste Optikeinheit (17a) dazu ausgestaltet ist, den Messstrahl (15) zu der ersten Fokuslinie zu fokussieren, wobei die zweite Optikeinheit (17b) dazu ausgestaltet ist, den Referenzstrahl (13) zu einer zweiten Fokuslinie auf den Körper (18) zu fokussieren, die parallel zur ersten Fokuslinie verläuft, und wenigstens einen Teil einer Reflektion der zweiten Fokuslinie vom Körper (18) dem Interferometer zuzuführen,
wobei die Optik dazu ausgestaltet ist, den Messstrahl (15) und den Referenzstrahl (13) aus einander entgegengesetzten Richtungen auf den Körper (18) zu richten.

4. Vorrichtung nach Anspruch 1 oder Anspruch 2, wobei das Interferometer zur Nutzung des Messstrahls (15) und eines Referenzstrahls (13) ausgestaltet ist,
wobei die Optik eine erste Optikeinheit (17a) und eine dritte Optikeinheit (17c) aufweist,
wobei die erste Optikeinheit (17a) dazu ausgestaltet ist, den Messstrahl (15) zu der ersten Fokuslinie zu fokussieren, wobei die dritte Optikeinheit (17c) dazu ausgestaltet ist, den Referenzstrahl (13) zu einer dritten Fokuslinie auf den Körper (18) zu fokussieren, die parallel zur ersten Fokuslinie verläuft, und wenigstens einen Teil einer Reflektion der dritten Fokuslinie vom Körper (18) dem Interferometer zuzuführen,
wobei die erste und die dritte Fokuslinie entlang der Rotationsachse (5) gegeneinander versetzt sind.

5. Vorrichtung nach Anspruch 1 oder 2,
wobei das Interferometer zur Nutzung eines Messstrahls (15) und eines von einem Referenzspiegel (16) reflektierten Referenzstrahls (13) ausgestaltet ist,
wobei das Interferometer einen Strahlteiler (14) zur Aufteilung eines Ausgangsstrahls in den Messstrahl (15) und den Referenzstrahl (13) aufweist,
wobei der Strahlteiler (14) dazu ausgestaltet ist, den Ausgangsstrahl so aufzuteilen, dass der Messstrahl (15) eine gegenüber dem Referenzstahl (13) höhere Intensität aufweist, und/oder der Referenzspiegel (16) als teildurchlässiger Spiegel zur Verringerung der Intensität des reflektierten Referenzstrahls (13) gegenüber dem einfallenden Referenzstrahl (13) ausgestaltet ist.

6. Positioniersystem, mit
einer Rotationseinheit (1) mit einer Rotationsachse (5),
einer an der Rotationseinheit angebrachten Positioniereinheit (2), die zur Positionierung eines Körpers (3, 18) wenigstens in einer quer zur Rotationsachse verlaufenden Ebene ausgestaltet ist, und
einer Vorrichtung nach einem der vorstehenden Ansprüche,
wobei das Positioniersystem dazu ausgestaltet ist, anhand von Vermessungsergebnissen der Vorrichtung unter Nutzung der Positioniereinheit eine gewünschte Positionierung des Körpers relativ zur Rotationsachse zu erreichen.

7. Verfahren zur Vermessung einer Rotation eines Körpers (18) um eine Rotationsachse (5), mit einem Interferometer (11, 12, 14, 16, 19) und einer Optik (17, 17a),
wobei durch die Optik (17, 17a) wenigstens ein kollimierter Messstrahl (15) des Interferometers zu einer ersten Fokuslinie auf den Körper (18) fokussiert wird, die quer zur Rotationsachse (5) verläuft, und wenigstens einen Teil einer Reflektion der ersten Fokuslinie vom Körper (18) dem Interferometer zugeführt wird,
wobei die Vermessung unter Nutzung des Interferometers und der Reflektion vorgenommen wird.

## Claims

1. Device for measuring a rotation of a body (18) about an axis of rotation (5), comprising
an interferometer (11, 12, 14, 16, 19) and
an optical system (17, 17a),
wherein the optical system (17, 17a) is configured to focus onto the body (18) at least one collimated working beam (15) of the interferometer for a first focus line extending transversely to the axis of rotation (5), and to feed to the interferometer at least a part of a reflection of the first focus line by the body (18),
wherein the device is configured to carry out the measurement using the interferometer and the reflection.

2. Device according to claim 1,
wherein the interferometer has a main unit (11, 19) and a measuring head (12, 14), which are optically interconnected by means of at least one optical fibre, wherein the main unit has a light source (11) and a sensor (19).

3. Device according to any of the preceding claims,
wherein the interferometer is configured to use the working beam (15) and a reference beam (13),
wherein the optical system has a first optical unit (17) and a second optical unit (17b), wherein the first optical unit (17a) is configured to focus the working beam (15) for the first focus line, wherein the second optical unit (17b) is configured to focus onto the body (18) the reference beam (13) for a second focus line extending in parallel with the first focus line, and to feed to the interferometer at least a part of a reflection of the second focus line by the body (18),
wherein the optical system is configured to direct the working beam (15) and the reference beam (13) at the body (18) from opposite directions.

4. Device according to either claim 1 or claim 2,
wherein the interferometer is configured to use the working beam (15) and a reference beam (13),
wherein the optical system has a first optical unit (17) and a third optical unit (17c), wherein the first optical unit (17a) is configured to focus the working beam (15) for the first focus line, wherein the third optical unit (17c) is configured to focus onto the body (18) the reference beam (13) for a third focus line extending in parallel with the first focus line, and to feed to the interferometer at least a part of a reflection of the third focus line by the body (18),
wherein the first and the third focus line are offset from one another along the axis of rotation (5).

5. Device according to either claim 1 or claim 2,
wherein the interferometer is configured to use a working beam (15) and a reference beam (13) reflected by a reference mirror (16),
wherein the interferometer has a beam splitter (14) for splitting an output beam into the working beam (15) and the reference beam (13),
wherein the beam splitter (14) is configured to split the output beam such that the working beam (15) has a higher intensity compared with the reference beam (13) and/or the reference mirror (16) is configured as a partially reflective mirror for reducing the intensity of the reflected reference beam (13) compared with the incident reference beam (13).

6. Positioning system comprising
a rotation unit (1) having an axis of rotation (5),
a positioning unit (2) attached to the rotation unit and configured to position a body (3, 18) at least in a plane that extends transversely to the axis of rotation, and
a device according to any of the preceding claims,
wherein the positioning system is configured to reach a desired positioning of the body relative to the axis of rotation on the basis of measurement results from the device by using the positioning unit.

7. Method for measuring a rotation of a body (18) about an axis of rotation (5), using an interferometer (11, 12, 14, 16, 19) and an optical system (17, 17a),
wherein at least one collimated working beam (15) of the interferometer for a first focus line extending transversely to the axis of rotation (5) is focused onto the body (18) by the optical system (17, 17a), and at least a part of a reflection of the first focus line by the body (18) is fed to the interferometer,
wherein the measurement is carried out using the interferometer and the reflection.

## Revendications

1. Dispositif de mesurage d'une rotation d'un corps (18) autour d'un axe de rotation (5), avec
un interféromètre (11, 12, 14, 16, 19) et
une optique (17, 17a),
dans lequel l'optique (17, 17a) est conçue pour focaliser au moins un faisceau de mesure (15) collimaté de l'interféromètre en une première ligne focale jusque sur le corps (18), laquelle se déroule transversalement à l'axe de rotation (5), et pour conduire au moins une partie d'une réflexion de la première ligne focale depuis le corps (18) jusqu'à l'interféromètre,
dans lequel le dispositif est conçu pour effectuer le mesurage par l'utilisation de l'interféromètre et de la réflexion.

2. Dispositif selon la revendication 1,
dans lequel l'interféromètre présente une unité principale (11, 19) et une tête de mesure (12, 14) qui sont optiquement reliées ensemble via au moins un guide de lumière, dans lequel l'unité principale présente une source de lumière (11) et un capteur (19).

3. Dispositif selon l'une des revendications précédentes,
dans lequel l'interféromètre est conçu pour l'utilisation du faisceau de mesure (15) et d'un faisceau de référence (13),
dans lequel l'optique présente une première unité optique (17a) et une deuxième unité optique (17b),
dans lequel la première unité optique (17a) est conçue pour focaliser le faisceau de mesure (15) en la première ligne focale, dans lequel la deuxième unité optique (17b) est conçue pour focaliser le faisceau de référence (13) en une deuxième ligne focale jusque sur le corps (18), laquelle se déroule parallèlement à la première ligne focale, et pour conduire au moins une partie d'une réflexion de la deuxième ligne focale depuis le corps (18) jusqu'à l'interféromètre,
dans lequel l'optique est conçue pour orienter le faisceau de mesure (15) et le faisceau de référence (13) jusque sur le corps (18) depuis des directions opposées l'une à l'autre.

4. Dispositif selon la revendication 1 ou la revendication 2,
dans lequel l'interféromètre est conçu pour l'utilisation du faisceau de mesure (15) et d'un faisceau de référence (13),
dans lequel l'optique présente une première unité optique (17a) et une troisième unité optique (17c),
dans lequel la première unité optique (17a) est conçue pour focaliser le faisceau de mesure (15) en la première ligne focale, dans lequel la troisième unité optique (17c) est conçue pour focaliser le faisceau de référence (13) en une troisième ligne focale jusque sur le corps (18), laquelle se déroule parallèlement à la première ligne focale, et pour conduire au moins une partie d'une réflexion de la troisième ligne focale depuis le corps (18) jusqu'à l'interféromètre,
dans lequel la première et la troisième ligne focale sont décalées l'une par rapport à l'autre le long de l'axe de rotation (5).

5. Dispositif selon la revendication 1 ou 2,
dans lequel l'interféromètre est conçu pour l'utilisation d'un faisceau de mesure (15) et d'un faisceau de référence (13) reflété par un miroir de référence (16),
dans lequel l'interféromètre présente un guide de faisceau (14) pour la répartition d'un faisceau de sortie jusque dans le faisceau de mesure (15) et le faisceau de référence (13),
dans lequel le guide de faisceau (14) est conçu pour répartir le faisceau de sortie de telle sorte que le faisceau de mesure (15) présente une intensité plus élevée à l'égard du faisceau de référence (13), et/ou le miroir de référence (16) est conçu en tant que miroir partiellement transparent pour la réduction de l'intensité du faisceau de référence (13) reflété à l'égard du faisceau de référence (13) incident.

6. Système de positionnement, avec
une unité de rotation (1) avec un axe de rotation (5),
une unité de positionnement (2) montée contre l'unité de rotation et conçue pour le positionnement d'un corps (3, 18) au moins dans un plan qui se déroule transversalement à l'axe de rotation, et
un dispositif selon l'une des revendications précédentes, dans lequel le système de positionnement est conçu pour atteindre un positionnement souhaité du corps par rapport à l'axe de rotation sur la base de résultats de mesurage du dispositif et par l'utilisation de l'unité de positionnement.

7. Procédé de mesurage d'une rotation d'un corps (18) autour d'un axe de rotation (5), avec un interféromètre (11, 12, 14, 16, 19) et une optique (17, 17a),
dans lequel via l'optique (17, 17a) au moins un faisceau de mesure (15) collimaté de l'interféromètre est focalisé en une première ligne focale jusque sur le corps (18), laquelle se déroule transversalement à l'axe de rotation (5), et au moins une partie d'une réflexion de la première ligne focale est conduite depuis le corps (18) jusqu'à l'interféromètre,
dans lequel le mesurage est effectué par l'utilisation de l'interféromètre et de la réflexion.
